# EUROPÄISCHE PATENTSCHRIFT

(11) **EP 3 251 993 B1**
(45) Veröffentlichungstag und Bekanntmachung des Hinweises auf die Patenterteilung: **28.11.2018**
(21) Anmeldenummer: 17172663.1
(22) Anmeldetag: 24.05.2017
(51) Int. Cl.: B65H 39/02, B42B 9/00, B42C 1/12, B42C 19/00, G05B 19/04

(54) **VERFAHREN UND VORRICHTUNG ZUR STEUERUNG EINER DRUCKWEITERVERARBEITUNGSANLAGE**
METHOD AND DEVICE FOR OPERATING A PRINT POST-PROCESSING SYSTEM
PROCÉDÉ ET DISPOSITIF DE COMMANDE D'UNE INSTALLATION DE TRAITEMENT ULTÉRIEUR DE PRODUITS D'IMPRESSION

(30) Priorität: 30.05.2016 CH 6912016
(43) Veröffentlichungstag der Anmeldung: 06.12.2017
(73) Patentinhaber: Müller Martini Holding AG, 6052 Hergiswil (CH)
(72) Erfinder: Strub, Alexander, 5036 Oberentfelden (CH); Hess, Andreas, 4802 Strengelbach (CH); Schmid, Christian, 4852 Rothrist (CH)

(56) Entgegenhaltungen:
- DE-A1- 19 752 015
- DE-T2- 68 926 781

## Beschreibung

Die Erfindung betrifft ein Verfahren und eine Vorrichtung zur Steuerung einer für die Herstellung von Druckerzeugnissen vorgesehenen Druckweiterverarbeitungsanlage, welche zur Anpassung an aufeinander folgende, unterschiedliche Fertigungsaufträge mehrere in Reihe nacheinander und/oder parallel zueinander angeordnete und mit einer gemeinsamen, computerbasierten Steuereinrichtung verbundene, austauschbare Einzelvorrichtungen aufweist, wobei die gemeinsame Steuereinrichtung über ein Datenverarbeitungsnetzwerk mit Informationen zur Art der in der Druckweiterverarbeitungsanlage enthaltenen Einzelvorrichtungen und zu deren jeweiliger Position in der Druckweiterverarbeitungsanlage versorgt wird und auf Grundlage dieser Informationen die Einzelvorrichtungen ansteuert. Zudem betrifft die Erfindung eine Druckweiterverarbeitungsanlage mit einer solchen Steuervorrichtung.

Beim Weiterverarbeiten von Druckprodukten in einer solchen Druckweiterverarbeitungsanlage erfolgen jeweils mehrere Arbeitsschritte nacheinander. Dabei werden die Druckprodukte oder deren Teile je nach Arbeitsauftrag, d.h. beispielsweise je nach Art, Format und Adressierung des herzustellenden Druckerzeugnisses, zumindest teilweise unterschiedlich gefördert, gefalzt, geschnitten, verbunden oder anderweitig bearbeitet.

Während in der Vergangenheit relativ häufig grosse bis sehr grosse Auflagen von z.T. mehreren Tausend gleichen Druckprodukten pro Fertigungsauftrag hergestellt worden sind, geht die Tendenz inzwischen zu aufeinander folgenden Fertigungsaufträgen unterschiedlicher Druckprodukte in Kleinserien bis hin zur Fertigung von Einzelprodukten. Dementsprechend müssen die einzelnen Vorrichtungen einer Druckweiterverarbeitungsanlage aus Zeit- und Kostengründen möglichst schnell auf die Herstellung unterschiedlicher Druckprodukte eingestellt und/oder gegen zur Herstellung anderer Druckprodukte geeignete Vorrichtungen ausgetauscht werden. Zumindest durch den Austausch von Vorrichtungen ändert sich jedoch die Konfiguration der Druckweiterverarbeitungsanlage. Zur effektiven Antriebssteuerung einer solchen Druckweiterverarbeitungsanlage muss deren aktuelle Konfiguration an die Steuereinrichtung weitergeleitet werden, d.h. sowohl die Art der eingebauten einzelnen Vorrichtungen als auch deren jeweilige Position bzw. Reihenfolge in der Druckweiterverarbeitungsanlage.

Aus der EP1457847 A2 ist es bekannt, die Art der Vorrichtungen jeweils über einen Indikator sowie eine mit den Indikatoren verbunden Steuereinrichtung zu ermitteln. Dabei kann der Indikator ein für jede Vorrichtung individuell ausgebildeter Stecker oder ein Stecker mit einer Anzahl gleicher, je nach Vorrichtung unterschiedlich mit Spannung oder Stromstärke beaufschlagbarer Stifte sein. Weiterhin sind alternative Lösungen offenbart, bei denen der Indikator ein für die jeweilige Vorrichtung charakteristisches, digitales Signal erzeugt und dieses selbst oder auch dessen Länge zur Identifikation der jeweiligen Vorrichtung verwendet wird. Schliesslich kann der Indikator auch ein Datenträger sein. Für jede austauschbare Vorrichtung ist somit ein mit der Steuereinrichtung über eine separate Kabelverbindung oder über eine drahtlose Verbindung zusammenwirkender Indikator angeordnet. Die Steuereinrichtung kann Informationen zur Position, an der sich eine bestimmte Vorrichtung der Druckweiterverarbeitungsanlage befindet, entweder über eine zusätzliche Sensorik oder über eine manuelle Eingabe durch den Maschinenbediener erhalten. Aufgrund der Vielzahl der erforderlichen Bauteile sind eine solche Vorrichtung sowie das damit realisierte Verfahren relativ kosten- und zeitaufwändig. Zudem ist eine manuelle Positionseingabe fehleranfällig.

Mit der DE19752015 A1 ist ein Verfahren zur Antriebssteuerung einer als Sammelhefter ausgebildeten Druckweiterverarbeitungsanlage bekannt, wobei die einzelnen Vorrichtungen des Sammelhefters jeweils über eine Einzelantriebseinheit und jeweils eine mit dieser verbundene Steuereinrichtung verfügen. Dabei können die Motoren der Einzelantriebseinheiten je nach Arbeitsauftrag unterschiedlich geregelt werden.

Der dazu zwischen der Steuereinrichtung und der jeweiligen Vorrichtung erforderliche Austausch von Daten- und/oder Steuersignalen erfolgt über einen Feldbus. Auf diese Weise können in den Sammelhefter integrierte neue oder andere Vorrichtungen vorteilhaft ohne zusätzliche Kabelverbindungen realisiert werden. Bei dieser Lösung kann die Steuereinrichtung Informationen zur Position, an der sich eine bestimmte Vorrichtung der Druckweiterverarbeitungsanlage befindet bzw. zur Reihenfolge der Vorrichtungen in der Druckweiterverarbeitungsanlage, ebenfalls entweder über eine zusätzliche Sensorik oder über eine manuelle Eingabe durch den Maschinenbediener erhalten. Eine zusätzliche Sensorik ist jedoch kosten- und zeitaufwändig und eine manuelle Positionseingabe fehleranfällig.

Aus der DE68926781 T2 sind eine Dokumenteneinsteckvorrichtung mit mehreren Zuliefermodulen, mit einem Einsteckmodul sowie mit einer Einrichtung zum Durchleiten zu verarbeitender Dokumente durch die Zuliefermodule bis hin zum Einsteckmodul sowie ein entsprechendes Verfahren zum Betrieb der Dokumenteneinsteckvorrichtung bekannt. Dabei weist die Dokumenteneinsteckvorrichtung mehrere in Reihe nacheinander angeordnete und mit einer gemeinsamen, computerbasierten Steuereinrichtung verbundene, austauschbare Zuliefermodule auf. Die gemeinsame Steuereinrichtung wird über ein Datenverarbeitungsnetzwerk mit Informationen zur Art der in der Dokumenteneinsteckvorrichtung enthaltenen Zuliefermodule und zu deren jeweiliger Position in der Dokumenteneinsteckvorrichtung versorgt und steuert auf Grundlage dieser Informationen die Zuliefermodule an. Die Informationen zur Position der Zuliefermodule in der Dokumenteneinsteckvorrichtung werden aufgrund ihrer jeweiligen Position in einem als Ringverdrahtung ausgebildeten ersten Datenverarbeitungsnetzwerk ermittelt.

Aufgabe der Erfindung war es daher ein einfaches, kostengünstiges und für Fehler unanfälliges Verfahren, eine entsprechende Vorrichtung zur Steuerung einer zur Anpassung an unterschiedliche Fertigungsaufträge mehrere in Reihe nacheinander und/oder parallel zueinander angeordnete, austauschbare Einzelvorrichtungen aufweisenden Druckweiterverarbeitungsanlage sowie eine Druckweiterverarbeitungsanlage mit einer solchen Vorrichtung zu schaffen.
Diese Aufgabe wird durch ein Verfahren gemäss des kennzeichnenden Teils des Anspruchs 1, durch eine Vorrichtung gemäss des kennzeichnendem Teils des Anspruchs 10 und durch eine Druckweiterverarbeitungsanlage gemäss des kennzeichnenden Teils des Anspruchs 17 gelöst. Vorteilhafte Ausführungsformen sind Gegenstände der jeweiligen Unteransprüche.
Beim Verfahren werden die Informationen zur Position der Einzelvorrichtungen in der Druckweiterverarbeitungsanlage aufgrund ihrer jeweiligen Position in einem als Ringverdrahtung ausgebildeten ersten Datenverarbeitungsnetzwerk ermittelt. Dazu wird von den Einzelvorrichtungen erfindungsgemäss jeweils ein entsprechendes Datentelegramm über ein zweites Datenverarbeitungsnetzwerk an die gemeinsame, computerbasierte Steuereinrichtung weitergegeben. Dabei erfolgt nach dem Start der Druckweiterverarbeitungsanlage - auf Anfrage der gemeinsamen Steuereinrichtung - durch die in die Druckweiterverarbeitungsanlage eingebauten Einzelvorrichtungen jeweils eine zur Identifikation der Einzelvorrichtungen dienende Ausgabe eines erstes Datentelegramms über das zweite Datenverarbeitungsnetzwerk an die gemeinsame Steuereinrichtung. Daraufhin wird von der gemeinsamen Steuereinrichtung über das erste Datenverarbeitungsnetzwerk ein erstes diskretes Signal an eine sich an einer ersten Position im ersten Datenverarbeitungsnetzwerk befindliche Einzelvorrichtung ausgegeben. Diese Einzelvorrichtung detektiert das erste diskrete Signal und gibt daraufhin über das zweite Datenverarbeitungsnetzwerk ein zweites Datentelegramm zum Empfang des ersten diskreten Signals an die gemeinsame Steuereinrichtung aus. Aufgrund des zweiten Datentelegramms ermittelt die gemeinsame Steuereinrichtung die Position dieser Einzelvorrichtung in der Druckweiterverarbeitungsanlage und gibt ein drittes Datentelegramm an die erste Einzelvorrichtung aus. Daraufhin erzeugt die derart identifizierte erste Einzelvorrichtung ein zweites diskretes Signal und gibt dieses über das erste Datenverarbeitungsnetzwerk an eine nachfolgend angeordnete Einzelvorrichtung aus.

Dieser Vorgang wird über alle der in Reihe nacheinander angeordneten Einzelvorrichtungen der Druckweiterverarbeitungsanlage wiederholt, wobei jeweils ein weiteres diskretes Signal erzeugt und über das erste Datenverarbeitungsnetzwerk an eine nachfolgend angeordneten Einzelvorrichtung der Druckweiterverarbeitungsanlage ausgegeben wird. Dabei generiert eine sich an einer letzten Position im ersten Datenverarbeitungsnetzwerk befindliche Einzelvorrichtung ein letztes diskretes Signal entsprechend der n-ten Position dieser Einzelvorrichtung und gibt dieses letzte diskrete Signal über das erste Datenverarbeitungsnetzwerk an die gemeinsame Steuereinrichtung aus. Nach Eingang und Auswertung des letzten diskreten Signals in der gemeinsame Steuerungseinrichtung löst diese mit weiteren über das zweite Datenverarbeitungsnetzwerk versandten Datentelegrammen die Ansteuerung der Einzelvorrichtungen aus.

Bei dieser Art der Positionsermittlung sind keine kostenrelevanten zusätzlichen Elektronikbauteile für eine Sensorik und auch keine fehleranfällige manuelle Positionseingabe erforderlich. Vielmehr wird eine an sich aus der Elektronik und Computerindustrie bekannte Technologie, bei der mehrere Elektronikbauteile in einem Ring miteinander verdrahtet sind, vorteilhaft zur Ermittlung der jeweiligen Position von Einzelvorrichtungen in einer Druckweiterverarbeitungsanlage genutzt. Dabei erweist es sich als überraschend, dass ein solches bisher zu anderen Zwecken verwendetes Verdrahtungsschema aufgrund der damit fest vorgegebenen Abfolge der Datenweiterleitung zur Positionsermittlung von Einzelvorrichtungen einer Druckweiterverarbeitungsanlage herangezogen werden kann. Die ermittelten Informationen werden dann über ein herkömmliches zweites Datennetzwerk an die gemeinsame Steuereinrichtung weitergegeben und dort unter anderem zur Positionsermittlung der Einzelvorrichtungen ausgewertet. Es ergibt sich somit ein einfaches, kostengünstiges und für Fehler unanfälliges Verfahren zur Steuerung einer für die Herstellung von Druckerzeugnissen vorgesehenen Druckweiterverarbeitungsanlage und insbesondere zur Positionsermittlung von Einzelvorrichtungen einer Druckweiterverarbeitungsanlage sowie zur Weitergabe und Verarbeitung der auf diese Weise ermittelten Informationen.

Dieses Verfahren gibt eine vorteilhafte Lösung zur Ermittlung der Anzahl n sowie der jeweiligen Position der in der Druckweiterverarbeitungsanlage befindlichen Einzelvorrichtungen und zur Weitergabe entsprechender Informationen an die gemeinsame Steuereinrichtung an. Dabei wird in der gemeinsame Steuereinrichtung die Position jeder Einzelvorrichtung nach deren Ermittlung verwaltet und diese Verwaltung nach dem über das erste Datenverarbeitungsnetzwerk erfolgten Eingang des letzten diskreten Signals abgeschlossen. Zudem ermöglicht ein solches Verfahren, dass Fehlerquellen, wie z.B. Unterbrüche im Netzwerk erkannt und vermieden werden.

Gemäss einer Ausführungsform des erfindungsgemässen Verfahrens wird in der gemeinsame Steuereinrichtung ermittelt, welche Position die Einzelvorrichtungen in der Druckweiterverarbeitungsanlage innehaben. Je nach den Leistungskriterien der eingesetzten Elektronikbauteile stellt diese zentrale Positionsermittlung eine vorteilhafte Lösungsvariante dar. Zudem kann eine zentrale Positionsermittlung auch bei der Vernetzung der Druckweiterverarbeitungsanlage mit weiteren Vorrichtungen von Vorteil sein.

Entsprechend einer Ausführungsform des erfindungsgemässen Verfahrens wird eine Information betreffend eine letzte Einzelvorrichtung der Druckweiterverarbeitungsanlage über das erste Datenverarbeitungsnetzwerk an die gemeinsame Steuereinrichtung weitergegeben. Erst nach Eingang dieser Information werden die Einzelvorrichtungen angesteuert.

Die gemeinsame Steuereinrichtung kann somit überprüfen, ob die über das erste Datennetzwerk eingegangene Information betreffend die letzte Einzelvorrichtung mit den aus den über das zweite Datenverarbeitungsnetzwerk erhaltenen Informationen abgeleiteten Erkenntnissen zur Anzahl der in der Druckweiterverarbeitungsanlage angeordneten austauschbaren Einzelvorrichtungen übereinstimmen. Anderenfalls können entsprechende Massnahmen eingeleitet werden, wie beispielsweise eine individuelle Überprüfung der Einzelvorrichtungen und der die gemeinsame Steuereinrichtung sowie die beiden Datenverarbeitungsnetzwerke aufweisenden Steuervorrichtung durch einen Maschinenbediener. Da nach Eingang dieser über das erste Datennetzwerk erhaltenen Information definitiv auch die letzte Einzelvorrichtung der Druckweiterverarbeitungsanlage durch die gemeinsame Steuereinrichtung identifiziert worden ist, kann zudem sichergestellt werden, dass erst nach Identifikation aller aktuell in der Druckweiterverarbeitungsanlage angeordneten, austauschbaren Einzelvorrichtungen entsprechende Datentelegramme zur Ansteuerung der Einzelvorrichtungen abgegeben werden. Demnach kann mit dieser Ausführungsform des erfindungsgemässen Verfahrens vorteilhaft sowohl hohen Qualitäts- als auch Sicherheitsanforderungen Rechnung getragen werden.

Gemäss einer Ausführungsform des erfindungsgemässen Verfahrens wird die Information betreffend eine letzte Einzelvorrichtung der Druckweiterverarbeitungsanlage aus dem ersten Datenverarbeitungsnetzwerk abgezweigt, zu den Einzelvorrichtungen weitergeleitet und von diesen über das zweite Datenverarbeitungsnetzwerk an die gemeinsame Steuereinrichtung weitergegeben. Wenn diese Informationen bei der gemeinsame Steuereinrichtung nicht von allen Einzelvorrichtungen ankommen, können durch die gemeinsame Steuereinrichtung entsprechende Fehler bei den Einzelvorrichtungen oder Unterbrechungen in der Weiterleitung der Signale vorteilhaft genau lokalisiert werden.

Entsprechend einer weiteren Ausführungsform des erfindungsgemässen Verfahrens wird zumindest jeweils mit einem der von den Einzelvorrichtungen an die gemeinsame Steuereinrichtung ausgegebenen Datentelegrammen auch eine Information zur Art der jeweiligen Einzelvorrichtung weitergegeben. Dieses Verfahren gibt eine einfache, kostengünstige Ausführungsform zur Weiterleitung von Informationen zur Art der jeweiligen Einzelvorrichtung an.

Entsprechend einer weiteren Ausführungsform des erfindungsgemässen Verfahrens wird mindestens eine Einzelvorrichtung der Druckweiterverarbeitungsanlage gegen eine andere Einzelvorrichtung ausgetauscht, wobei mit dem Entfernen der mindestens einen Einzelvorrichtung die beiden Datenverarbeitungsnetzwerke unterbrochen und mit dem erfolgten Austausch der mindestens einen Einzelvorrichtung gegen eine andere Einzelvorrichtung wieder geschlossen werden. Damit können das Verfahren und die Vorrichtung zur Steuerung der Druckweiterverarbeitungsanlage auf einfache Weise an solche aufeinanderfolgende, unterschiedliche Fertigungsaufträge angepasst werden, bei denen ein Austausch von Einzelvorrichtungen erforderlich ist.

Entsprechend einer weiteren Ausführungsform des erfindungsgemässen Verfahrens wird mindestens eine Einzelvorrichtung der Druckweiterverarbeitungsanlage ersatzlos entfernt und die beiden damit unterbrochenen Datenverarbeitungsnetzwerke werden anschliessend wieder geschlossen. Damit können das Verfahren und die Vorrichtung zur Steuerung der Druckweiterverarbeitungsanlage und insbesondere deren Steuerung auf einfache und sichere Weise an solche aufeinander folgende, unterschiedliche Fertigungsaufträge angepasst werden, bei denen mindestens eine Einzelvorrichtung aus der Druckweiterverarbeitungsanlage entfernt werden muss.

Entsprechend einer weiteren Ausführungsform des erfindungsgemässen Verfahrens wird überwacht, ob das letzte diskrete Signal in der gemeinsamen Steuereinrichtung ankommt und die Druckweiterverarbeitungsanlage anderenfalls nicht gestartet oder angehalten. Mit dieser Massnahme kann auf einfache, kostengünstige Weise sichergestellt werden, dass die Druckweiterverarbeitungsanlage bei Störungen nicht versucht, weitere Druckerzeugnisse herzustellen.

Entsprechend einer weiteren Ausführungsform des erfindungsgemässen Verfahrens wird mit oder nach Ausgabe des ersten diskreten Signals an die Druckweiterverarbeitungsanlage eine Zeitüberwachung mit einer vorgegebenen Sollzeit ausgelöst und die Druckweiterverarbeitungsanlage nicht gestartet oder angehalten, falls das letzte diskrete Signal nicht innerhalb dieser Sollzeit in der gemeinsamen Steuereinrichtung ankommt. Diese Massnahme ermöglicht vorteilhaft ein noch schnelleres Abschalten der Druckweiterverarbeitungsanlage bei Störungen.

Die Vorrichtung weist ein erstes und ein zweites, die Einzelvorrichtungen jeweils mit der gemeinsamen Steuereinrichtung verbindendes Datenverarbeitungsnetzwerk auf. Das erste Datenverarbeitungsnetzwerk ist als eine Ringverdrahtung ausgebildet, wobei die Informationen zur Position der Einzelvorrichtungen in der Druckweiterverarbeitungsanlage aufgrund ihrer jeweiligen Position im ersten Datenverarbeitungsnetzwerk ermittelbar sind. Dazu ist von den Einzelvorrichtungen erfindungsgemäss jeweils ein entsprechendes Datentelegramm über das zweite Datenverarbeitungsnetzwerk an die gemeinsame Steuereinrichtung weitergebbar. Dabei ist nach dem Start der Druckweiterverarbeitungsanlage mit den in diese eingebauten Einzelvorrichtungen auf Anfrage der gemeinsamen Steuereinrichtung jeweils ein erstes Datentelegramm zur Identifikation der Einzelvorrichtungen über das zweite Datenverarbeitungsnetzwerk an die gemeinsame Steuereinrichtung ausgebbar. Daraufhin ist von der gemeinsamen Steuereinrichtung über das erste Datenverarbeitungsnetzwerk ein erstes diskretes Signal an eine sich in einer ersten Position im ersten Datenverarbeitungsnetzwerk befindliche Einzelvorrichtung ausgebbar. Mit dieser Einzelvorrichtung ist das erste diskrete Signal detektierbar und daraufhin über das zweite Datenverarbeitungsnetzwerk ein zweites Datentelegramm zum Empfang des ersten diskreten Signals an die gemeinsame Steuereinrichtung ausgebbar. Mit der gemeinsamen Steuereinrichtung ist aufgrund des zweiten Datentelegramms die Position dieser Einzelvorrichtung ermittelbar und ein drittes Datentelegramm an die erste Einzelvorrichtung ausgebbar. Mit der ersten Einzelvorrichtung ist aufgrund des dritten Datentelegramms ein zweites diskretes Signal generierbar und über das erste Datenverarbeitungsnetzwerk an eine nachfolgend angeordnete Einzelvorrichtung ausgebbar. Dieser Vorgang ist über alle der in Reihe nacheinander angeordneten Einzelvorrichtungen der Druckweiterverarbeitungsanlage wiederholbar, wobei jeweils ein weiteres diskretes Signal generierbar und über das erste Datenverarbeitungsnetzwerk an eine nachfolgend angeordneten Einzelvorrichtung der Druckweiterverarbeitungsanlage ausgebbar ist, wobei mit einer sich an einer letzten Position im ersten Datenverarbeitungsnetzwerk befindlichen Einzelvorrichtung ein letztes diskretes Signal entsprechend der n-ten Position dieser Einzelvorrichtung erzeugbar und über das erste Datenverarbeitungsnetzwerk an die gemeinsame Steuereinrichtung ausgebbar ist. Mit der gemeinsamen Steuereinrichtung ist nach Eingang und Auswertung des letzten diskreten Signals die Ansteuerung der Einzelvorrichtungen mit weiteren Datentelegrammen über das zweite Datenverarbeitungsnetzwerk auslösbar.

Aufgrund der Anordnung und Verwendung des ersten Datenverarbeitungsnetzwerks zur Ermittlung der Informationen zur jeweiligen Position der Einzelvorrichtungen in der Druckweiterverarbeitungsanlage erübrigt sich sowohl die Verwendung zusätzlicher Elektronikbauteile für eine Sensorik als auch ein manuelle Positionseingabe. Es kann somit eine verhältnismässig einfache, preisgünstige und wenig fehleranfällige Vorrichtung verwendet werden.

Gemäss einer Ausführungsform der erfindungsgemässen Vorrichtung ist eine letzte Einzelvorrichtung der Druckweiterverarbeitungsanlage über das erste Datenverarbeitungsnetzwerk mit der gemeinsamen Steuereinrichtung verbunden.

Aufgrund dieser zusätzlichen Verbindung kann die gemeinsame Steuereinrichtung überprüfen, ob die über das erste Datennetzwerk betreffend der letzten Einzelvorrichtung der Steuervorrichtung eingegangene Information mit den aus den über das zweite Datenverarbeitungsnetzwerk erhaltenen Informationen abgeleiteten Erkenntnissen zur Anzahl der in der Druckweiterverarbeitungsanlage angeordneten austauschbaren Einzelvorrichtungen übereinstimmen. Anderenfalls können entsprechende Massnahmen eingeleitet werden, wie beispielsweise eine individuelle Überprüfung der Steuervorrichtung inklusive der Einzelvorrichtungen durch einen Maschinenbediener. Da nach Eingang der über das erste Datennetzwerk erhaltenen Information definitiv auch die letzte Einzelvorrichtung der Druckweiterverarbeitungsanlage durch die gemeinsame Steuereinrichtung identifiziert worden ist, kann zudem sichergestellt werden, dass erst nach vollständiger Identifikation aller aktuell in der Druckweiterverarbeitungsanlage angeordneten, austauschbaren Einzelvorrichtungen entsprechende Datentelegramme zur Ansteuerung dieser Einzelvorrichtungen abgegeben werden. Demnach kann mit dieser Ausführungsform der erfindungsgemässen Vorrichtung vorteilhaft sowohl hohen Qualitäts- als auch Sicherheitsanforderungen Rechnung getragen werden.

Entsprechend einer weiteren Ausführungsform der erfindungsgemässen Vorrichtung sind im ersten Datenverarbeitungsnetzwerk für jede Einzelvorrichtung der Druckweiterverarbeitungsanlage mindestens ein Signaleingang und mindestens ein Signalausgang sowie ein mit dem zweiten Datenverarbeitungsnetzwerk verbundenes Signalempfangs- und -erzeugungselement angeordnet. Ebenso ist die gemeinsame Steuereinrichtung mit mindestens einem Signaleingang und mindestens einem Signalausgang sowie mit einem sowohl mit dem ersten als auch mit dem zweiten Datenverarbeitungsnetzwerk verbundenen Zentralcomputer versehen. Mit solchen herkömmlichen Elektronikbauteilen kann jeweils eine einfache, kostengünstige Lösung realisiert werden.

Gemäss einer weiteren Ausführungsform der erfindungsgemässen Vorrichtung weist das erste Datenverarbeitungsnetzwerk Abzweigungen zu einem zweiten Signaleingang der austauschbaren Einzelvorrichtungen auf. Aufgrund dessen lassen sich Fehler bei den Einzelvorrichtungen oder Unterbrechungen in der Weiterleitung der Signale mit der gemeinsamen Steuereinrichtung genau lokalisieren, weil in diesem Fall keine Weiterleitung von Informationen über eine defekten Einzelvorrichtung bzw. über eine unterbrochene Verbindung des ersten Datenverarbeitungsnetzwerkes erfolgt.

Entsprechend einer weiteren Ausführungsform der erfindungsgemässen Vorrichtung ist das erste Datenverarbeitungsnetzwerk als Daisy-Chain-Netzwerk ausgebildet. Mit einem solchen aus der Elektronik und Computerindustrie bekannten Verdrahtungsschema lassen sich zudem vorteilhaft Konflikte und Fehlfunktionen in der Signalverarbeitung verhindern.

Gemäss einer weiteren Ausführungsform der erfindungsgemässen Vorrichtung ist das zweite Datenverarbeitungsnetzwerk als ETHERNET POWERLINK ausgebildet, einem offenen Standard, der von der Anwendergruppe ESPG weiterentwickelt und spezifiziert wird. Damit kann vorteilhaft eine bekannte, standardisierte und damit kostengünstige Lösung genutzt werden.

Eine mit einer solchen, zuvor beschriebenen Steuervorrichtung ausgestattete, erfindungsgemässe Druckweiterverarbeitungsanlage weist mehrere austauschbare Einzelvorrichtungen auf, welche über das erste und das zweite Datenverarbeitungsnetzwerk mit der gemeinsamen Steuereinrichtung verbunden sind. Mit einer solchen Druckweiterverarbeitungsanlage erübrigt sich sowohl die Verwendung zusätzlicher Elektronikbauteile für eine Sensorik als auch ein manuelle Positionseingabe. Es kann somit eine verhältnismässig einfache, preisgünstige und wenig fehleranfällige Druckweiterverarbeitungsanlage verwendet werden.

Entsprechend einer weiteren Ausführungsform der erfindungsgemässen Druckweiterverarbeitungsanlage weist diese zusätzlich zu den austauschbaren Einzelvorrichtungen mindestens eine fest installierte Einzelvorrichtung auf, welche lediglich über das zweite Datenverarbeitungsnetzwerk mit der gemeinsamen Steuereinrichtung verbunden ist. Dadurch kann eine solche Druckweiterverarbeitungsanlage vorteilhaft sowohl mit austauschbaren als auch mit fest installierten Einzelvorrichtungen ausgelegt werden.

Gemäss einer weiteren Ausführungsform der erfindungsgemässen Druckweiterverarbeitungsanlage ist diese als Sammelhefter und deren Einzelvorrichtungen als Anleger des Sammelhefters ausgebildet. Obwohl diese Ausführungsform eine bestimmte Konfiguration der Druckweiterverarbeitungsanlage betrifft, kann die erfindungsgemäss Vorrichtung natürlich auch bei anderen Druckweiterverarbeitungsanlagen eingesetzt werden, beispielsweise bei Klebebindern oder Zusammentragmaschinen.

Natürlich können ein solches Steuerverfahren und eine solche Steuervorrichtung auch für Druckweiterverarbeitungsanlagen mit aufeinander folgenden Druckaufträgen verwendet werden, welche ohne Austausch von Einzelvorrichtungen auskommen. In diesem Fall kann damit vorteilhaft eine Diagnose der Einzelvorrichtungen und der entsprechenden Verbindungen über die Datenverarbeitungsnetzwerke erfolgen.

Nachfolgend wird die Erfindung anhand eines Ausführungsbeispiels näher beschrieben. Dabei zeigen:

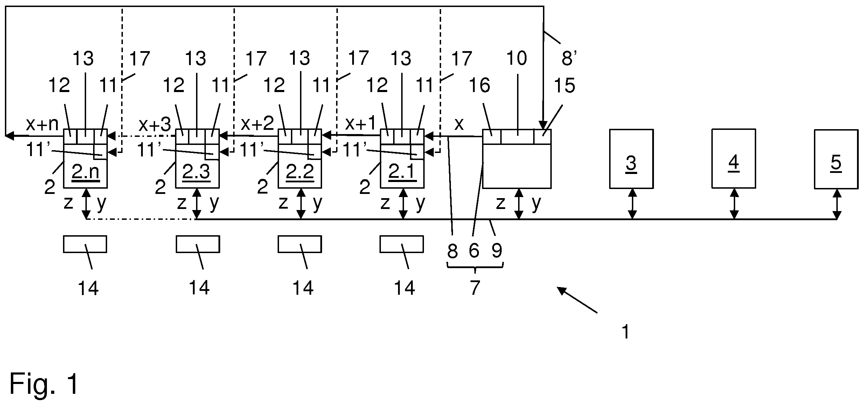

- Fig. 1: Eine schematische Darstellung einer als Sammelhefter ausgebildeten Druckweiterverarbeitungsanlage mit der erfindungsgemässen Steuervorrichtung.

Die Fig. 1 zeigt in einer schematischen Darstellung eine beispielhafte, als Sammelhefter ausgebildete Druckweiterverarbeitungsanlage 1, mit einer Anzahl n von in Reihe nacheinander angeordneten, jeweils als Druckbogenanleger ausgebildeten, austauschbaren Einzelvorrichtungen 2, mit einer fest installierten Heftmaschine 3, einer als Dreischneider ausgebildeten, ebenfalls fest installierte Schneidmaschine 4 und zumindest einer durch die Druckweiterverarbeitungsanlage 1 hindurchlaufenden, gleichfalls fest installierten Transporteinrichtung 5 zum Fördern von in der Druckweiterverarbeitungsanlage 1 verarbeiteten, nicht dargestellten Druckbogen. Zudem weist die Druckweiterverarbeitungsanlage 1 eine gemeinsame computerbasierte Steuereinrichtung 6 für die vorgenannten Bauteile auf, welche dazu jeweils mit der gemeinsamen Steuereinrichtung 6 verbunden sind. Natürlich kann ergänzend auch zumindest eine weitere Steuereinrichtung für einzelne oder für mehrere dieser Bauteile angeordnet sein. Die Druckbogenanleger werden nachfolgend vereinfacht als Anleger 2.1, 2.2, 2.3 ... 2.n bezeichnet.

Eine Vorrichtung 7 zur Steuerung des Sammelhefters weist ausser der gemeinsamen Steuereinrichtung 6 ein erstes Datenverarbeitungsnetzwerk 8 sowie ein zweites Datenverarbeitungsnetzwerk 9 auf, welche jeweils zwischen der gemeinsamen Steuereinrichtung 6 des Sammelhefters und dessen austauschbaren Anlegern 2.1, 2.2, 2.3 ... 2.n angeordnet sind. Das erste Datenverarbeitungsnetzwerk 8 ist als eine Ringverdrahtung 8' ausgebildet, so dass die gemeinsame Steuereinrichtung 6 über das erste Datenverarbeitungsnetzwerk 8 direkt mit einem ersten Anleger 2.1 und mit einem letzten Anleger 2.n dieses Datenverarbeitungsnetzwerks 8 verbunden ist. Zudem ist die gemeinsame Steuereinrichtung 6 über das zweite Datenverarbeitungsnetzwerk 9 auch mit der Heftmaschine 3, der Schneidmaschine 4 und mit der Transporteinrichtung 5 verbunden. Das erste Datenverarbeitungsnetzwerk 8 kann vorteilhaft als Daisy-Chain-Netzwerk und das zweite Datenverarbeitungsnetzwerk 9 als Ethernet-Powerlink ausgebildet sein. Obwohl die Verdrahtung der beiden Datenverarbeitungsnetzwerke 8, 9 in Fig. 1 zum besseren Verständnis jeweils einzeln dargestellt ist, sind diese Einzeldrähte in der Regel jedoch gemeinsam in einem einzigen, hier nicht dargestellten Kabelrohr angeordnet.

Die als Anleger 2.1, 2.2, 2.3, ..., 2.n ausgebildeten, austauschbaren Einzelvorrichtungen 2 sind sowohl im ersten Datenverarbeitungsnetzwerk 8 als auch in der Druckweiterverarbeitungsanlage 1 in Reihe nacheinander angeordnet und weisen jeweils mindestens einen Signaleingang 11 und mindestens einen Signalausgang 12 des ersten Datenverarbeitungsnetzwerks 8 sowie ein mit beiden Datenverarbeitungsnetzwerken 8, 9 zusammenwirkendes, beispielsweise als Remote-IO ausgebildetes Signalempfangs- und -erzeugungselement 13 auf. Mit anderen Worten sind im ersten Datenverarbeitungsnetzwerk 8 für jeden Anleger 2.1, 2.2, 2.3, ..., 2.n des Sammelhefters mindestens ein Signaleingang 11 und mindestens ein Signalausgang 12 sowie ein mit dem zweiten Datenverarbeitungsnetzwerk 9 verbundenes Signalempfangs- und -erzeugungselement 13 angeordnet. Für die Anleger 2.1, 2.2, 2.3, ..., 2.n ist jeweils ein als Anleger-Unterbau ausgebildeter Positionierplatz 14 vorgesehen, auf welchem die Anleger 2.1, 2.2, 2.3, ..., 2.n austauschbar angeordnet sind. Die gemeinsamen Steuereinrichtung 6 weist ebenfalls mindestens einen Signaleingang 15 und mindestens einen Signalausgang 16 sowie einen sowohl mit dem ersten als auch mit dem zweiten Datenverarbeitungsnetzwerk 8, 9 verbundenen Zentralcomputer 10 auf. Schliesslich besitzt das erste Datenverarbeitungsnetzwerk 8 Abzweigungen 17 zu einem zweiten Signaleingang 11' der austauschbaren Einzelvorrichtungen 2, welche ihrerseits über das zweite Datenverarbeitungsnetzwerk 9 mit der gemeinsamen Steuereinrichtung 6 verbunden sind.

Der in Fig. 1 dargestellte Sammelhefter dient in an sich bekannter Weise zur Herstellung von an ihrem Rücken gehefteten Broschüren, Zeitschriften und ähnlichen Druckerzeugnissen aus einer Anzahl gefalzter Druckbogen. Dazu wird beispielsweise mittels der Anleger 2.1, 2.2, 2.3, ..., 2.n aus in nicht dargestellten Stapelmagazinen bereitgelegten Stapeln untereinander jeweils gleicher, jedoch von Stapel zu Stapel bzw. von Anleger zu Anleger unterschiedlicher, gefalzter Druckbogen jeweils ein Druckbogen abgezogen, geöffnet und taktsynchron auf die als sattelförmige Sammelkette ausgebildete Transporteinrichtung 5 abgelegt. Infolge des fortlaufenden Transports der Druckbogen mittels der Sammelkette erfolgt diese Ablage und damit das Zusammentragen unterschiedlicher Druckbogen rittlings übereinander. Danach werden die zusammengetragenen Druckbogen von der Heftmaschine 3 in ihrem Falzbereich mittels Heftklammern geheftet und schliesslich in der Schneidmaschine 4 an den restlichen drei Seiten auf das erforderlich Format zugeschnitten. Die Herstellung der Druckerzeugnisse verläuft in Fig. 1 demnach von links nach rechts. Alternativ zur Reihenanordnung können die Anleger 2.1, 2.2, 2.3, ..., 2.n auch parallel zueinander im Sammelhefter angeordnet sein oder es können zusätzlich einzelne Anleger parallel zu einzelnen in Reihe angeordneten Anlegern angeordnet werden. Dabei erfolgt die Anordnung der Anleger 2.1, 2.2, 2.3, ..., 2.n im ersten Datenverarbeitungsnetzwerk 1 jedoch stets in Ringverdrahtung 8', also in Reihe nacheinander.

Mit speziellen Anlegern können ausserdem auch Werbemittel wie beispielsweise Prospekte, Einladungen, Gewinnspiele, aber auch Ergänzungsprodukte wie beispielsweise Warenmuster, Karten oder Compact Discs (CDs) beigestellt werden, welche zudem für einen bestimmten Empfängerkreis aber auch für eine bestimmte Person vorgesehen, d.h. individualisiert sein können.

Je nach Abfolge der aktuellen Fertigungsaufträge werden dazu die Anleger 2.1, 2.2, 2.3, ..., 2.n bedarfsgerecht von einem zu einem anderen Positionierplatz 14 verschoben, beispielsweise mittels eines nicht dargestellten Umsetzwagens. Ebenso können Anleger 2.1, 2.2, 2.3, ..., 2.n aus dem Sammelhefter entfernt aber auch auf freie Positionierplätze 14 hinzugefügt werden. Auf diese Weise können nacheinander unterschiedliche Druckerzeugnisse gefertigt werden.

Nach dem Start des Sammelhefters geben die in diesen eingebauten Anleger 2.1, 2.2, 2.3, ..., 2.n auf Anfrage der gemeinsamen Steuereinrichtung 6 über das zweite Datenverarbeitungsnetzwerk 9 jeweils ein erstes Datentelegramm y zur Identifikation der jeweiligen Anleger 2.1, 2.2, 2.3, ..., 2.n an die gemeinsame Steuereinrichtung 6 aus. Dabei enthält ein solches Datentelegramm zumindest eine Ziel-Identifikationsnummer (ID) und zumindest ein Datenpaket mit dem der jeweilige Anleger 2.1, 2.2, 2.3, ..., 2.n sein Vorhandensein im Sammelhefter mitteilt. Zudem kann auch ein Datenpaket mit einer Information zur Art des jeweiligen Anlegers 2.1, 2.2, 2.3, ..., 2.n enthalten sein.

Nach Eingang dieser Datentelegramme y verwaltet die gemeinsame Steuereinrichtung 6 jeden Anleger 2.1, 2.2, 2.3, ..., 2.n im Zentralcomputer 10 und gibt an ihrem Signalausgang 16 über das erste Datenverarbeitungsnetzwerk 8 ein erstes diskretes Signal x, beispielsweise ein 24V-Signal, an einen sich an einer ersten Position im ersten Datenverarbeitungsnetzwerk 8 befindlichen Anleger 2.1 aus. Das erste diskrete Signal x geht im Signaleingang 11 dieses Anlegers 2.1 ein und wird mittels dessen Signalempfangs- und -erzeugungselements 13 detektiert. Dieses generiert daraufhin ein zweites Datentelegramm y zur Bestätigung des Empfangs des ersten diskreten Signals x und sendet das zweite Datentelegramm y über das zweite Datenverarbeitungsnetzwerk 9 an die gemeinsame Steuereinrichtung 6. Falls nicht bereits früher übermittelt, kann mit diesem zweiten Datentelegramm y auch eine Information zur Art des ersten Anlegers 2.1 weitergegeben werden. Aufgrund des zweiten Datentelegramms y ermittelt die gemeinsamen Steuereinrichtung 6 die Position des Anlegers 2.1 und gibt über das zweite Datenverarbeitungsnetzwerk 9 ein drittes Datentelegramm z an den nunmehr hinsichtlich seiner Position im Sammelhefter und ggf. auch hinsichtlich seiner Art identifizierten ersten Anleger 2.1 aus. Daraufhin generiert das Signalempfangs- und -erzeugungselement 12 des ersten Anlegers 2.1 ein zweites diskretes Signal x+1 und sendet dieses über seinen Signalausgang 12 und über das erste Datenverarbeitungsnetzwerk 8 an den Signaleingang 11 des nachfolgend angeordneten Anlegers 2.2. Dessen Signalempfangs- und -erzeugungselement 13 generiert daraufhin ein weiteres Datentelegramm y zur Bestätigung des Empfangs des zweiten diskreten Signals x+1 und sendet dieses Datentelegramm y über das zweite Datenverarbeitungsnetzwerk 9 an die gemeinsamen Steuereinrichtung 6.

Dieser Vorgang wird über alle weiteren der in Reihe nacheinander angeordneten Anleger 2.2, 2.3, ... des Sammelhefters wiederholt. Dabei wird jeweils ein weiteres diskretes Signal x+2, x+3, ... generiert und über das erste Datenverarbeitungsnetzwerk 8 an einen nachfolgend angeordneten Anleger 2.3, ... des Sammelhefters ausgegeben. Das Signalempfangs- und -erzeugungselement 13 des jeweils nachfolgend angeordneten Anlegers 2.3, ... generiert wiederum ein Datentelegramm y, aufgrund dessen seine Identifikation im Zentralcomputer 10 der gemeinsamen Steuereinrichtung 6 des Sammelhefters erfolgt. Auf diese Weise werden fortlaufend alle Anleger 2.1, 2.2, 2.3, ..., 2.n des Sammelhefters hinsichtlich ihrer Position identifiziert. Das Signalempfangs- und -erzeugungselement 13 des sich an der letzten Position im ersten Datenverarbeitungsnetzwerk 8 befindlichen Anlegers 2.n erzeugt ein letztes diskretes Signal x+n entsprechend der n-ten Position dieses Anlegers 2.n und gibt dieses Signal x+n über seinen Signalausgang 12 und über das als Ringvernetzung 8' ausgebildete erste Datenverarbeitungsnetzwerk 8 an den Signaleingang 15 der gemeinsamen Steuereinrichtung 6 aus.

Basierend auf der Auswertung des über das erste Datenverarbeitungsnetzwerk 8 erhaltenen letzten diskreten Signals x+n, d.h. einer Information betreffend eine letzte Einzelvorrichtung 2 der Druckweiterverarbeitungsanlage 1, sowie der über das zweite Datenverarbeitungsnetzwerk 9 erhaltenen Datentelegramme y und der damit erfolgten Identifikation auch des letzten Anlegers 2.n löst die gemeinsame Steuereinrichtung 6 die Ansteuerung der Anleger 2.1, 2.2, 2.3 ... 2.n des Sammelhefters mit weiteren Datentelegrammen z über das zweite Datenverarbeitungsnetzwerk 9 aus.

Zudem kann das letzte diskrete Signal x+n, also die Information betreffend die letzte Einzelvorrichtung 2 der Druckweiterverarbeitungsanlage 1, aus dem ersten Datenverarbeitungsnetzwerk 8 über die Abzweigungen 17 abgezweigt, zu den Einzelvorrichtungen 2 weitergeleitet und von diesen über das zweite Datenverarbeitungsnetzwerk 9 an die gemeinsame Steuereinrichtung 6 weitergegeben werden. Wenn die abgezweigten Informationen nicht bei der gemeinsamen Steuereinrichtung 6 ankommen, kann die gemeinsame Steuereinrichtung 6 Fehler bei den Einzelvorrichtungen 2 oder Unterbrechungen in der Weiterleitung der Informationen genau lokalisieren.

Bei diesem Verfahren werden die Informationen zur Position der Anleger 2.1., 2.2, 2.3 ... 2.n im Sammelhefter somit aufgrund ihrer jeweiligen Position im als Ringverdrahtung 8' ausgebildeten ersten Datenverarbeitungsnetzwerk 8 ermittelt. Dazu wird von den Anlegern 2.1., 2.2, 2.3 ... 2.n jeweils ein entsprechendes Datentelegramm y über das zweite Datenverarbeitungsnetzwerk 9 an die gemeinsame Steuereinrichtung 6 weitergegeben. Die Informationen zur Anzahl n der Anleger 2.1., 2.2, 2.3 ... 2.n wird mittels des letzten diskreten Signals x+n des Signalempfangs- und -erzeugungselements 13 des sich an der letzten Position im ersten Datenverarbeitungsnetzwerk 8 befindlichen Anlegers 2.n über das erste Datenverarbeitungsnetzwerk 8 an die gemeinsame Steuereinrichtung 6 ausgegeben. Die Weitergabe von Information zur Art der Anleger 2.1., 2.2, 2.3 ... 2.n an die gemeinsame Steuereinrichtung 6 erfolgt ebenfalls mittels der Datentelegramme y über das zweite Datenverarbeitungsnetzwerk 9.

Aus Sicherheitsgründen wird überwacht ob das letzte diskrete Signal x+n in der gemeinsamen Steuereinrichtung 6 ankommt und der Sammelhefter anderenfalls nicht gestartet oder angehalten. Alternativ dazu kann mit oder nach Ausgabe des ersten diskreten Signals x an den Sammelhefter eine nicht dargestellte Zeitüberwachung mit einer vorgegebenen Sollzeit ausgelöst und der Sammelhefter nicht gestartet oder angehalten werden, falls das letzte diskrete Signal x+n nicht innerhalb dieser Sollzeit in der gemeinsamen Steuereinrichtung 6 ankommt.

Beim Austausch mindestens eines Anlegers 2.1., 2.2, 2.3 ... 2.n des Sammelhefters gegen einen anderen Anleger 2.1., 2.2, 2.3 ... 2.n, werden mit dem Entfernen des mindestens einen Anlegers 2.1., 2.2, 2.3 ... 2.n die beiden Datenverarbeitungsnetzwerke 8, 9 temporär unterbrochen und mit dem auf den freigewordenen Positionierplatz 14, d.h. auf den Anleger-Unterbau, erfolgenden Einbau des anderen Anlegers 2.1., 2.2, 2.3 ... 2.n wieder geschlossen.

Wird dagegen mindestens ein Anleger 2.1., 2.2, 2.3 ... 2.n des Sammelhefters ersatzlos entfernt, entsteht ein freier Positionierplatz 14, bei dem die beiden unterbrochenen Datenverarbeitungsnetzwerke 8, 9 beispielsweise durch Einbau eines Signalempfangs- und -erzeugungselements 13 wieder geschlossen werden. Natürlich kann auf einen freien Positionierplatz 14 auch ein Anleger 2.1., 2.2, 2.3 ... 2.n eingebaut werden. Dazu wird zunächst das vorgängig eingebaute Signalempfangs- und -erzeugungselement 13 wieder entfernt und die damit unterbrochenen Datenverarbeitungsnetzwerke 8, 9 werden durch Einbau des neuen Anlegers 2.1., 2.2, 2.3 ... 2.n wieder geschlossen.

Aufgrund der Ausbildung der Anleger 2.1., 2.2, 2.3 ... 2.n mit Signaleingang 11 und Signalausgang 12 sowie Signalempfangs- und -erzeugungselement 13 kann der Anleger-Unterbau vorteilhaft ohne Elektronik-Hardware ausgelegt werden.

## Patentansprüche

1. Verfahren zur Steuerung einer für die Herstellung von Druckerzeugnissen vorgesehenen Druckweiterverarbeitungsanlage (1), welche zur Anpassung an aufeinander folgende, unterschiedliche Fertigungsaufträge mehrere in Reihe nacheinander und/oder parallel zueinander angeordnete und mit einer gemeinsamen Steuereinrichtung (6) verbundene, austauschbare Einzelvorrichtungen (2) aufweist, bei dem die gemeinsame Steuereinrichtung (6) über ein Datenverarbeitungsnetzwerk mit Informationen zur Art der in der Druckweiterverarbeitungsanlage (1) enthaltenen Einzelvorrichtungen (2) und zu deren jeweiliger Position in der Druckweiterverarbeitungsanlage (1) versorgt wird und auf Grundlage dieser Informationen die Einzelvorrichtungen (2) ansteuert, wobei die Informationen zur Position der Einzelvorrichtungen (2) in der Druckweiterverarbeitungsanlage (1) aufgrund ihrer jeweiligen Position in einem als Ringverdrahtung (8') ausgebildeten ersten Datenverarbeitungsnetzwerk (8) ermittelt werden, **dadurch gekennzeichnet, dass** dazu von den Einzelvorrichtungen (2) jeweils ein entsprechendes Datentelegramm (y) über ein zweites Datenverarbeitungsnetzwerk (9) an die gemeinsame Steuereinrichtung (6) weitergegeben wird, wobei
• nach dem Start der Druckweiterverarbeitungsanlage (1) die in diese eingebauten Einzelvorrichtungen (2) auf Anfrage der gemeinsamen Steuereinrichtung (6) jeweils ein erstes Datentelegramm (y) zur Identifikation der Einzelvorrichtungen (2) über das zweite Datenverarbeitungsnetzwerk (9) an die gemeinsame Steuereinrichtung (6) ausgeben,
• daraufhin von der gemeinsamen Steuereinrichtung (6) über das erste Datenverarbeitungsnetzwerk (8) ein erstes diskretes Signal (x) an eine sich in einer ersten Position im ersten Datenverarbeitungsnetzwerk (8) befindliche Einzelvorrichtung (2) ausgegeben wird,
• diese Einzelvorrichtung (2) das erste diskrete Signal (x) detektiert und daraufhin über das zweite Datenverarbeitungsnetzwerk (9) ein zweites Datentelegramm (y) zum Empfang des ersten diskreten Signals (x) an die gemeinsame Steuereinrichtung (6) ausgibt,
• die gemeinsame Steuereinrichtung (6) aufgrund des zweiten Datentelegramms (y) die Position dieser Einzelvorrichtung (2) ermittelt und ein drittes Datentelegramm (z) an die erste Einzelvorrichtung (2) ausgibt,
• die erste Einzelvorrichtung (2) aufgrund des dritten Datentelegramms (z) ein zweites diskretes Signal (x+1) generiert und über das erste Datenverarbeitungsnetzwerk (8) an eine nachfolgend angeordnete Einzelvorrichtung (2) ausgibt,
• dieser Vorgang über alle der in Reihe nacheinander angeordneten Einzelvorrichtungen (2) der Druckweiterverarbeitungsanlage (1) wiederholt wird, wobei jeweils ein weiteres diskretes Signal (x+2, x+3, ...) generiert und über das erste Datenverarbeitungsnetzwerk (8) an eine nachfolgend angeordneten Einzelvorrichtung (2) der Druckweiterverarbeitungsanlage (1) ausgegeben wird, wobei eine sich an einer letzten Position im ersten Datenverarbeitungsnetzwerk (8) befindlichen Einzelvorrichtung (2) ein letztes diskretes Signal (x+n) entsprechend der n-ten Position dieser Einzelvorrichtung (2) erzeugt und über das erste Datenverarbeitungsnetzwerk (8) an die gemeinsame Steuereinrichtung (6) ausgibt, und
• die gemeinsame Steuereinrichtung (6) nach Eingang und Auswertung des letzten diskreten Signals (x+n) die Ansteuerung der Einzelvorrichtungen (2) mit weiteren Datentelegrammen (z) über das zweite Datenverarbeitungsnetzwerk (9) auslöst.

2. Verfahren nach Anspruch 1, **dadurch gekennzeichnet, dass** die Position der Einzelvorrichtungen (2) in der Druckweiterverarbeitungsanlage (1) in der gemeinsame Steuereinrichtung (6) ermittelt wird.

3. Verfahren nach Anspruch 1 oder 2, **dadurch gekennzeichnet, dass** eine Information betreffend eine letzte Einzelvorrichtung (2) der Druckweiterverarbeitungsanlage (1) über das erste Datenverarbeitungsnetzwerk (8) an die gemeinsame Steuereinrichtung (6) weitergegeben wird und die Einzelvorrichtungen (2) erst nach Eingang dieser Information angesteuert werden.

4. Verfahren nach Anspruch 3, **dadurch gekennzeichnet, dass** die Information betreffend eine letzte Einzelvorrichtung (2) der Druckweiterverarbeitungsanlage (1) aus dem ersten Datenverarbeitungsnetzwerk (8) abgezweigt, zu den Einzelvorrichtungen (2) weitergeleitet und von diesen über das zweite Datenverarbeitungsnetzwerk (9) an die gemeinsame Steuereinrichtung (6) weitergegeben wird.

5. Verfahren nach Anspruch 1, **dadurch gekennzeichnet, dass** zumindest jeweils mit einem der von den Einzelvorrichtungen (2) an die gemeinsame Steuereinrichtung (6) ausgegebenen Datentelegrammen (y) auch eine Information zur Art der jeweiligen Einzelvorrichtung (2) weitergegeben wird.

6. Verfahren nach einem der Ansprüche 1 bis 5, **dadurch gekennzeichnet, dass** mindestens eine Einzelvorrichtung (2) der Druckweiterverarbeitungsanlage (1) gegen eine andere Einzelvorrichtung (2) ausgetauscht wird, wobei mit dem Entfernen der mindestens einen Einzelvorrichtung (2) die beiden Datenverarbeitungsnetzwerke (8, 9) unterbrochen und mit dem erfolgten Austausch der mindestens einen Einzelvorrichtung (2) gegen eine andere Einzelvorrichtung (2) wieder geschlossen werden.

7. Verfahren nach einem der Ansprüche 1 bis 5, **dadurch gekennzeichnet, dass** mindestens eine Einzelvorrichtung (2) der Druckweiterverarbeitungsanlage (1) ersatzlos entfernt und die beiden damit unterbrochenen Datenverarbeitungsnetzwerke (8, 9) anschliessend wieder geschlossen werden.

8. Verfahren nach einem der Ansprüche 1 oder 5 bis 7, **dadurch gekennzeichnet, dass** überwacht wird, ob das letzte diskrete Signal (x+n) in der gemeinsamen Steuereinrichtung (6) ankommt und die Druckweiterverarbeitungsanlage (1) anderenfalls nicht gestartet oder angehalten wird.

9. Verfahren nach einem der Ansprüche 1 oder 5 bis 7, **dadurch gekennzeichnet, dass** mit oder nach Ausgabe des ersten diskreten Signals (x) an die Druckweiterverarbeitungsanlage (1) eine Zeitüberwachung mit einer vorgegebenen Sollzeit ausgelöst und die Druckweiterverarbeitungsanlage (1) nicht gestartet oder angehalten wird, falls das letzte diskrete Signal (x+n) nicht innerhalb dieser Sollzeit in der gemeinsamen Steuereinrichtung (6) ankommt.

10. Vorrichtung zur Steuerung einer für die Herstellung von Druckerzeugnissen vorgesehenen Druckweiterverarbeitungsanlage (1), welche zur Anpassung an aufeinanderfolgende, unterschiedliche Fertigungsaufträge mehrere in Reihe nacheinander angeordnete und mit einer gemeinsamen Steuereinrichtung (6) verbundene, austauschbare Einzelvorrichtungen (2) aufweist, wobei die gemeinsame Steuereinrichtung (6) über ein Datenverarbeitungsnetzwerk mit Informationen zur Art der in der Druckweiterverarbeitungsanlage (1) enthaltenen Einzelvorrichtungen (2) und zu deren jeweiliger Position in der Druckweiterverarbeitungsanlage (1) versorgt wird und auf Grundlage dieser Informationen die Einzelvorrichtungen (2) ansteuert, wobei die Vorrichtung (7) ein erstes und ein zweites, die Einzelvorrichtungen (2) jeweils mit der gemeinsamen Steuereinrichtung (6) verbindendes Datenverarbeitungsnetzwerk (8, 9) aufweist, wobei das erste Datenverarbeitungsnetzwerk (8) als eine Ringverdrahtung (8') ausgebildet ist, wobei die Informationen zur Position der Einzelvorrichtungen (2) in der Druckweiterverarbeitungsanlage (1) aufgrund ihrer jeweiligen Position im ersten Datenverarbeitungsnetzwerk (8) ermittelbar sind, **dadurch gekennzeichnet, dass** dazu von den Einzelvorrichtungen (2) jeweils ein entsprechendes Datentelegramm (y) über das zweite Datenverarbeitungsnetzwerk (9) an die gemeinsame Steuereinrichtung (6) weitergebbar ist, wobei
• nach dem Start der Druckweiterverarbeitungsanlage (1) mit den in diese eingebauten Einzelvorrichtungen (2) auf Anfrage der gemeinsamen Steuereinrichtung (6) jeweils ein erstes Datentelegramm (y) zur Identifikation der Einzelvorrichtungen (2) über das zweite Datenverarbeitungsnetzwerk (9) an die gemeinsame Steuereinrichtung (6) ausgebbar ist,
• daraufhin von der gemeinsamen Steuereinrichtung (6) über das erste Datenverarbeitungsnetzwerk (8) ein erstes diskretes Signal (x) an eine sich in einer ersten Position im ersten Datenverarbeitungsnetzwerk (8) befindliche Einzelvorrichtung (2) ausgebbar ist,
• mit dieser Einzelvorrichtung (2) das erste diskrete Signal (x) detektierbar und daraufhin über das zweite Datenverarbeitungsnetzwerk (9) ein zweites Datentelegramm (y) zum Empfang des ersten diskreten Signals (x) an die gemeinsame Steuereinrichtung (6) ausgebbar ist,
• mit der gemeinsamen Steuereinrichtung (6) aufgrund des zweiten Datentelegramms (y) die Position dieser Einzelvorrichtung (2) ermittelbar und ein drittes Datentelegramm (z) an die erste Einzelvorrichtung (2) ausgebbar ist,
• mit der ersten Einzelvorrichtung (2) aufgrund des dritten Datentelegramms (z) ein zweites diskretes Signal (x+1) generierbar und über das erste Datenverarbeitungsnetzwerk (8) an eine nachfolgend angeordnete Einzelvorrichtung (2) ausgebbar ist,
• dieser Vorgang über alle der in Reihe nacheinander angeordneten Einzelvorrichtungen (2) der Druckweiterverarbeitungsanlage (1) wiederholbar ist, wobei jeweils ein weiteres diskretes Signal (x+2, x+3, ...) generierbar und über das erste Datenverarbeitungsnetzwerk (8) an eine nachfolgend angeordneten Einzelvorrichtung (2) der Druckweiterverarbeitungsanlage (1) ausgebbar ist, wobei mit einer sich an einer letzten Position im ersten Datenverarbeitungsnetzwerk (8) befindlichen Einzelvorrichtung (2) ein letztes diskretes Signal (x+n) entsprechend der n-ten Position dieser Einzelvorrichtung (2) erzeugbar und über das erste Datenverarbeitungsnetzwerk (8) an die gemeinsame Steuereinrichtung (6) ausgebbar ist, und
• mit der gemeinsamen Steuereinrichtung (6) nach Eingang und Auswertung des letzten diskreten Signals (x+n) die Ansteuerung der Einzelvorrichtungen (2) mit weiteren Datentelegrammen (z) über das zweite Datenverarbeitungsnetzwerk (9) auslösbar ist.

11. Vorrichtung nach Anspruch 10, **dadurch gekennzeichnet, dass** eine letzte Einzelvorrichtung (2) der Druckweiterverarbeitungsanlage (1) über das erste Datenverarbeitungsnetzwerk (8) mit der gemeinsamen Steuereinrichtung (6) verbunden ist.

12. Vorrichtung nach Anspruch 10 oder 11, **dadurch gekennzeichnet, dass** im ersten Datenverarbeitungsnetzwerk (8) für jede austauschbare Einzelvorrichtung (2) der Druckweiterverarbeitungsanlage (1) mindestens ein Signaleingang (11) und mindestens ein Signalausgang (12) sowie ein mit dem zweiten Datenverarbeitungsnetzwerk (9) verbundenes Signalempfangs- und -erzeugungselement (13) angeordnet sind.

13. Vorrichtung nach Anspruch 12, **dadurch gekennzeichnet, dass** das erste Datenverarbeitungsnetzwerk (8) Abzweigungen (17) zu einem zweiten Signaleingang (11') der austauschbaren Einzelvorrichtungen (2) aufweist.

14. Vorrichtung nach einem der Ansprüche 10 bis 13, **dadurch gekennzeichnet, dass** die gemeinsame Steuereinrichtung (6) mindestens einen Signaleingang (15) und mindestens einen Signalausgang (16) sowie einen sowohl mit dem ersten als auch mit dem zweiten Datenverarbeitungsnetzwerk (8, 9) verbundenen Zentralcomputer (10) aufweist.

15. Vorrichtung nach einem der Ansprüche 10 bis 14, **dadurch gekennzeichnet, dass** das erste Datenverarbeitungsnetzwerk (8) als Daisy-Chain-Netzwerk ausgebildet ist.

16. Vorrichtung nach einem der Ansprüche 10 bis 15, **dadurch gekennzeichnet, dass** das zweite Datenverarbeitungsnetzwerk (9) als Ethernet-Powerlink ausgebildet ist.

17. Druckweiterverarbeitungsanlage mit einer Vorrichtung (7) nach einem der Ansprüche 10 bis 16, **dadurch gekennzeichnet, dass** die Druckweiterverarbeitungsanlage (1) mehrere austauschbare Einzelvorrichtungen (2) aufweist, welche über das erste und das zweite Datenverarbeitungsnetzwerk (8, 9) mit der gemeinsamen Steuereinrichtung (6) verbunden sind.

18. Druckweiterverarbeitungsanlage nach Anspruch 17, **dadurch gekennzeichnet, dass** sie zusätzlich zu den austauschbaren Einzelvorrichtungen (2) mindestens eine fest installierte Einzelvorrichtung (3, 4, 5) aufweist, welche lediglich über das zweite Datenverarbeitungsnetzwerk (9) mit der gemeinsamen Steuereinrichtung (6) verbunden ist.

19. Druckweiterverarbeitungsanlage nach Anspruch 17 oder 18, **dadurch gekennzeichnet, dass** die Druckweiterverarbeitungsanlage (1) als Sammelhefter und deren austauschbare Einzelvorrichtungen (2) als Anleger (2.1, 2.2, 2.3, ..., 2.n) des Sammelhefters ausgebildet sind.

## Claims

1. Method for controlling a print processing installation (1) provided for producing printed products, which has several individual devices (2) that may be exchanged, arranged in series one after the other and/or parallel to each other and connected to a joint control device (6), for adjusting to different work orders following one after the other, in which the joint control device (6) is provided with information regarding the type of the individual devices (2) contained in the print processing installation (1) and regarding their respective position in the print processing installation (1) via a data processing network and controls the individual devices (2) based on this information, in which the information regarding the position of the individual devices (2) in the print processing installation (1) is determined based on their respective position in a first data processing network (8) made as ring wiring (8'), **characterised in that** for this a corresponding data telegram (y) is passed on from the individual devices (2) via a second data processing network (9) to the joint control device (6) respectively, in which
• after the print processing installation (1) is started, at the request of the joint control device (6) the individual devices (2) incorporated in it emit a first data telegram (y) for identifying the individual devices (2) via the second data processing network (9) to the joint control device (6) respectively,
• then a first discrete signal (x) is emitted by the joint control device (6) via the first data processing network (8) to an individual device (2) located in a first position in the first data processing network (8),
• this individual device (2) detects the first discrete signal (x) and then emits a second data telegram (y) for receiving the first discrete signal (x) via the second data processing network (9) to the joint control device (6),
• the joint control device (6) determines the position of this individual device (2) based on the second data telegram (y) and emits a third data telegram (z) to the first individual device (2),
• the first individual device (2) generates a second discrete signal (x+1) based on the third data telegram (z) and emits it via the first data processing network (8) to an individual device (2) arranged following it,
• this process is repeated over all the individual devices (2) of the print processing installation (1) arranged in series one after the other, in which a further discrete signal (x+2, x+3, ...) is generated respectively and emitted via the first data processing network (8) to an individual device (2) of the print processing installation (1) arranged following it, in which an individual device (2) located in a last position in the first data processing network (8) produces a last discrete signal (x+n) corresponding to the nth position of this individual device (2) and emits it via the first data processing network (8) to the joint control device (6), and
• after the last discrete signal (x+n) is received and evaluated, the joint control device (6) triggers the control of the individual devices (2) with further data telegrams (z) via the second data processing network (9).

2. Method according to claim 1, **characterised in that** the position of the individual devices (2) in the print processing installation (1) is determined in the joint control device (6).

3. Method according to claim 1 or 2, **characterised in that** information concerning a last individual device (2) of the print processing installation (1) is passed on via the first data processing network (8) to the joint control device (6) and the individual devices (2) are only controlled after this information is received.

4. Method according to claim 3, **characterised in that** the information concerning a last individual device (2) of the print processing installation (1) is branched off from the first data processing network (8), forwarded to the individual devices (2) and passed on from these via the second data processing network (9) to the joint control device (6).

5. Method according to claim 1, **characterised in that** at least information regarding the respective individual device (2) is also passed on with one of the data telegrams (y) emitted by the individual devices (2) to the joint control device (6) respectively.

6. Method according to one of claims 1 to 5, **characterised in that** at least one individual device (2) of the print processing installation (1) is exchanged for another individual device (2), in which both data processing networks (8, 9) are interrupted when the at least one individual device (2) is removed and are closed again when the at least one individual device (2) is exchanged for another individual device (2).

7. Method according to one of claims 1 to 5, **characterised in that** at least one individual device (2) of the print processing installation (1) is removed without being replaced and both data processing networks (8, 9) that are interrupted by this are then closed again.

8. Method according to one of claims 1 or 5 to 7, **characterised in that** there is monitoring of whether the last discrete signal (x+n) arrives in the joint control device (6) and the print processing installation (1) is not started or stopped otherwise.

9. Method according to one of claims 1 or 5 to 7, **characterised in that** when or after the first discrete signal (x) is emitted to the print processing installation (1), a time monitoring is triggered with a preset target time and the print processing installation (1) is not started or stopped, if the last discrete signal (x+n) does not arrive in the joint control device (6) within this target time.

10. Device for controlling a print processing installation (1) provided for producing printed products, which has several individual devices (2) that may be exchanged, arranged in series one after the other and connected to a joint control device (6), for adjusting to different work orders following one after the other, in which the joint control device (6) is provided with information regarding the type of individual devices (2) contained in the print processing installation (1) and regarding their respective position in the print processing installation (1) via a data processing network and controls the individual devices (2) based on this information, in which the device (7) has a first and a second data processing network (8, 9) connecting the individual devices (2) to the joint control device (6) respectively, in which the first data processing network (8) is made as ring wiring (8'), in which the information regarding the position of the individual devices (2) in the print processing installation (1) are ascertainable based on their respective position in the first data processing network (8), **characterised in that** for this a corresponding data telegram (y) may be passed on from the individual devices (2) via the second data processing network (9) to the joint control device (6) respectively, in which
• after the print processing installation (1) is started, at the request of the joint control device (6) with the individual devices (2) incorporated in it a first data telegram (y) for identifying the individual devices (2) is displayable via the second data processing network (9) to the joint control device (6) respectively,
• then a first discrete signal (x) is displayable from the joint control device (6) via the first data processing network (8) to an individual device (2) located in a first position in the first data processing network (8),
• the first discrete signal (x) is detectable with this individual device (2) and then a second data telegram (y) for receiving the first discrete signal (x) is displayable via the second data processing network (9) to the joint control device (6),
• the position of this individual device (2) is ascertainable with the joint control device (6) based on the second data telegram (y) and a third data telegram (z) is displayable to the first individual device (2),
• a second discrete signal (x+1) is producible with the first individual device (2) based on the third data telegram (z) and is displayable via the first data processing network (8) to an individual device (2) arranged following it,
• this process is repeatable over all the individual devices (2) of the print processing installation (1) arranged in series one after the other, in which a further discrete signal (x+2, x+3, ...) is producible respectively and is displayable via the first data processing network (8) to an individual device (2) of the print processing installation (1) arranged following it, in which a last discrete signal (x+n) corresponding to the nth position of this individual device (2) is producible with an individual device (2) located in a last position in the first data processing network (8) and is displayable via the first data processing network (8) to the joint control device (6) and
• after the last discrete signal (x+n) is received and evaluated, the control of the individual devices (2) may be triggered with the joint control device (6) with further data telegrams (z) via the second data processing network (9).

11. Device according to claim 10, **characterised in that** a last individual device (2) of the print processing installation (1) is connected to the joint control device (6) via the first data processing network (8).

12. Device according to claim 10 or 11, **characterised in that** at least one signal input (11) and at least one signal output (12) as well as a signal receiving and producing element (13) connected to the second data processing network (9) is arranged in the first data processing network (8) for each individual device (2) of the print processing installation (1) that is exchangeable.

13. Device according to claim 12, **characterised in that** the first data processing network (8) has branches (17) to a second signal input (11') of the individual devices (2) that are exchangeable.

14. Device according to one of claims 10 to 13, **characterised in that** the joint control device (6) has at least one signal input (15) and at least one signal output (16) as well as a central computer (10) connected both to the first as well as the second data processing network (8, 9).

15. Device according to one of claims 10 to 14, **characterised in that** the first data processing network (8) is made as a daisy chain network.

16. Device according to one of claims 10 to 15, **characterised in that** the second data processing network (9) is made as an ethernet powerlink.

17. Print processing installation with a device (7) according to one of claims 10 to 16, **characterised in that** the print processing installation (1) has several individual devices (2) that are exchangeable, which are connected to the joint control device (6) via the first and second data processing network (8, 9).

18. Print processing installation according to claim 17, **characterised in that**, in addition to the individual devices (2) that are exchangeable, it has at least one permanently installed individual device (3, 4, 5), which is only connected to the joint control device (6) via the second data processing network (9).

19. Print processing installation according to claim 17 or 18, **characterised in that** the print processing installation (1) is made as a saddle stitcher and its individual devices (2) that are exchangeable are made as feeders (2.1, 2.2, 2.3, ..., 2.n) of the saddle stitcher.

## Revendications

1. Procédé de commande d'une installation (1) de finition d'impression prévue pour la fabrication de produits imprimés et munie, en vue de l'adaptation à différentes tâches de production se succédant mutuellement, de plusieurs interchangeables dispositifs individuels (2) agencés en succession alignée, et/ou parallèlement les uns aux autres, et raccordés à un dispositif commun de commande (6), procédé dans lequel ledit dispositif commun de commande (6) est alimenté, par l'intermédiaire d'un réseau de traitement de données, en informations relatives au type des dispositifs individuels (2) renfermés par l'installation (1) de finition d'impression et à l'emplacement considéré de ces derniers dans ladite installation (1) de finition d'impression, et pilote lesdits dispositifs individuels (2) sur la base de ces informations, sachant que lesdites informations, relatives à l'emplacement desdits dispositifs individuels (2) dans ladite installation (1) de finition d'impression, sont déterminées en se fondant sur leur emplacement respectif dans un premier réseau (8) de traitement de données, réalisé sous la forme d'un câblage annulaire (8'), **caractérisé par le fait que**, pour atteindre l'objet recherché, un message de données correspondant (y) est respectivement transmis au dispositif commun de commande (6) par les dispositifs individuels (2), par l'intermédiaire d'un second réseau (9) de traitement de données, étant précisé
• qu'à l'issue du démarrage de l'installation (1) de finition d'impression, les dispositifs individuels (2) intégrés dans cette dernière délivrent respectivement au dispositif commun de commande (6), sur demande dudit dispositif commun de commande (6) et par l'intermédiaire du second réseau (9) de traitement de données, un premier message de données (y) en vue de l'identification desdits dispositifs individuels (2),
• qu'un premier signal discret (x) est ensuite délivré par ledit dispositif commun de commande (6), par l'intermédiaire du premier réseau (8) de traitement de données, à un dispositif individuel (2) occupant un premier emplacement dans ledit premier réseau (8) de traitement de données,
• que ce dispositif individuel (2) détecte ledit premier signal discret (x) et délivre ensuite un deuxième message de données (y) audit dispositif commun de commande (6), par l'intermédiaire dudit second réseau (9) de traitement de données, en vue de la réception dudit premier signal discret (x),
• que, sur la base dudit deuxième message de données (y), ledit dispositif commun de commande (6) détermine l'emplacement de ce dispositif individuel (2) et délivre un troisième signal de données (z) audit premier dispositif individuel (2),
• que, sur la base dudit troisième message de données (z), ledit premier dispositif individuel (2) engendre un deuxième signal discret (x+1) et le délivre, par l'intermédiaire dudit premier réseau (8) de traitement de données, à un dispositif individuel (2) situé dans la continuité,
• que ce processus est réitéré pour la totalité des dispositifs individuels (2) agencés en succession alignée dans l'installation (1) de finition d'impression, un signal discret supplémentaire (x+2, x+3,...) étant alors respectivement engendré, puis délivré, par l'intermédiaire dudit premier réseau (8) de traitement de données, à un dispositif individuel (2) situé dans la continuité dans ladite installation (1) de finition d'impression, sachant qu'un dispositif individuel (2), occupant un dernier emplacement dans ledit premier réseau (8) de traitement de données, engendre un dernier signal discret (x+n) en concordance avec le nième emplacement de ce dispositif individuel (2), puis le délivre audit dispositif commun de commande (6) par l'intermédiaire dudit premier réseau (8) de traitement de données, et
• qu'à l'issue de la saisie et de l'évaluation dudit dernier signal discret (x+n), ledit dispositif commun de commande (6) déclenche le pilotage desdits dispositifs individuels (2) par des messages de données (z) supplémentaires, par l'intermédiaire du second réseau (9) de traitement de données.

2. Procédé selon la revendication 1, **caractérisé par le fait que** l'emplacement des dispositifs individuels (2), dans l'installation (1) de finition d'impression, est déterminé dans le dispositif commun de commande (6).

3. Procédé selon la revendication 1 ou 2, **caractérisé par le fait qu'**une information, concernant un dernier dispositif individuel (2) de l'installation (1) de finition d'impression, est retransmise au dispositif commun de commande (6) par l'intermédiaire du premier réseau (8) de traitement de données, les dispositifs individuels (2) étant pilotés uniquement après saisie de cette information.

4. Procédé selon la revendication 3, **caractérisé par le fait que** l'information, concernant un dernier dispositif individuel (2) de l'installation (1) de finition, est dérivée du premier réseau (8) de traitement de données, transmise aux dispositifs individuels (2) et retransmise, par ces derniers, au dispositif commun de commande (6) par l'intermédiaire du second réseau (9) de traitement de données.

5. Procédé selon la revendication 1, **caractérisé par le fait qu'**une information, relative au type du dispositif individuel (2) considéré, est également retransmise, à chaque fois, au moins par l'un des messages de données (y) délivrés au dispositif commun de commande (6) par les dispositifs individuels (2).

6. Procédé selon l'une des revendications 1 à 5, **caractérisé par le fait qu'**au moins un dispositif individuel (2) de l'installation (1) de finition d'impression est remplacé par un autre dispositif individuel (2), les deux réseaux (8, 9) de traitement de données étant alors interrompus par l'enlèvement dudit dispositif individuel (2) concerné au minimum, puis fermés de nouveau après que ledit dispositif individuel (2), concerné au minimum, a été remplacé par un autre dispositif individuel (2).

7. Procédé selon l'une des revendications 1 à 5, **caractérisé par le fait qu'**au moins un dispositif individuel (2) de l'installation (1) de finition d'impression est enlevé sans être remplacé, les deux réseaux (8, 9) de traitement de données, ainsi interrompus, étant fermés de nouveau dans l'enchaînement direct.

8. Procédé selon l'une des revendications 1 ou 5 à 7, **caractérisé par** une surveillance visant à établir si le dernier signal discret (x+n) parvient dans le dispositif commun de commande (6) et si, à défaut, l'installation (1) de finition d'impression n'est pas démarrée, ou est mise à l'arrêt.

9. Procédé selon l'une des revendications 1 ou 5 à 7, **caractérisé par le fait qu'**une surveillance temporelle est déclenchée, avec un temps de consigne préétabli, au cours ou à l'issue de la délivrance du premier signal discret (x) à l'installation (1) de finition d'impression, laquelle installation (1) de finition d'impression n'est pas démarrée, ou est mise à l'arrêt pour le cas où le dernier signal discret (x+n) ne parvient pas, dans le dispositif commun de commande (6), dans les limites de ce temps de consigne.

10. Appareil dévolu à la commande d'une installation (1) de finition d'impression prévue pour la fabrication de produits imprimés et munie, en vue de l'adaptation à différentes tâches de production se succédant mutuellement, de plusieurs dispositifs individuels interchangeables (2) agencés en succession alignée et raccordés à un dispositif commun de commande (6), sachant que ledit dispositif commun de commande (6) est alimenté, par l'intermédiaire d'un réseau de traitement de données, en informations relatives au type des dispositifs individuels (2) renfermés par l'installation (1) de finition d'impression et à l'emplacement considéré de ces derniers dans ladite installation (1) de finition d'impression, et pilote lesdits dispositifs individuels (2) sur la base de ces informations, ledit appareil (7) comportant des premier et second réseaux (8, 9) de traitement de données raccordant, à chaque fois, lesdits dispositifs individuels (2) audit dispositif commun de commande (6), le premier réseau (8) de traitement de données étant réalisé sous la forme d'un câblage annulaire (8'), sachant que lesdites informations, relatives à l'emplacement desdits dispositifs individuels (2) dans ladite installation (1) de finition d'impression, peuvent être déterminées en se fondant sur leur emplacement respectif dans ledit premier réseau (8) de traitement de données, **caractérisé par le fait que**, pour atteindre l'objet recherché, un message de données correspondant (y) peut être respectivement transmis au dispositif commun de commande (6) par les dispositifs individuels (2), par l'intermédiaire du second réseau (9) de traitement de données, étant précisé
• qu'à l'issue du démarrage de l'installation (1) de finition d'impression, un premier message de données (y) peut être respectivement délivré au dispositif commun de commande (6) au moyen des dispositifs individuels (2) intégrés dans ladite installation, sur demande dudit dispositif commun de commande (6) et par l'intermédiaire dudit second réseau (9) de traitement de données, en vue de l'identification desdits dispositifs individuels (2),
• qu'un premier signal discret (x) peut ensuite être délivré par ledit dispositif commun de commande (6), par l'intermédiaire du premier réseau (8) de traitement de données, à un dispositif individuel (2) occupant un premier emplacement dans ledit premier réseau (8) de traitement de données,
• que ledit premier signal discret (x) peut être détecté par ce dispositif individuel (2), un deuxième message de données (y) pouvant ensuite être délivré audit dispositif commun de commande (6), par l'intermédiaire dudit second réseau (9) de traitement de données, en vue de la réception dudit premier signal discret (x),
• que, sur la base dudit deuxième message de données (y), l'emplacement de ce dispositif individuel (2) peut être déterminé par ledit dispositif commun de commande (6), et un troisième signal de données (z) peut être délivré audit premier dispositif individuel (2),
• que, sur la base dudit troisième message de données (z), un deuxième signal discret (x+1) peut être engendré par ledit premier dispositif individuel (2), puis être délivré, par l'intermédiaire dudit premier réseau (8) de traitement de données, à un dispositif individuel (2) situé dans la continuité,
• que ce processus peut être réitéré pour la totalité des dispositifs individuels (2) agencés en succession alignée dans l'installation (1) de finition d'impression, un signal discret supplémentaire (x+2, x+3,...) pouvant alors être respectivement engendré, puis délivré, par l'intermédiaire dudit premier réseau (8) de traitement de données, à un dispositif individuel (2) situé dans la
continuité dans ladite installation (1) de finition d'impression, sachant qu'un dernier signal discret (x+n) peut être engendré par un dispositif individuel (2) occupant un dernier emplacement dans ledit premier réseau (8) de traitement de données, en concordance avec le nième emplacement de ce dispositif individuel (2), puis être délivré audit dispositif commun de commande (6) par l'intermédiaire dudit premier réseau (8) de traitement de données, et
• qu'à l'issue de la saisie et de l'évaluation dudit dernier signal discret (x+n), le pilotage desdits dispositifs individuels (2) peut être déclenché par ledit dispositif commun de commande (6), au moyen de messages de données (z) supplémentaires, par l'intermédiaire du second réseau (9) de traitement de données.

11. Appareil selon la revendication 10, **caractérisé par le fait qu'**un dernier dispositif individuel (2) de l'installation (1) de finition d'impression est raccordé au dispositif commun de commande (6) par l'intermédiaire du premier réseau (8) de traitement de données.

12. Appareil selon la revendication 10 ou 11, **caractérisé par le fait qu'**au moins une entrée de signaux (11) et au moins une sortie de signaux (12), ainsi qu'un élément (13) de réception et de génération de signaux, connecté au second réseau (9) de traitement de données, sont situés dans le premier réseau (8) de traitement de données pour chaque dispositif individuel remplaçable (2) de l'installation (1) de finition d'impression.

13. Appareil selon la revendication 12, **caractérisé par le fait que** le premier réseau (8) de traitement de données est muni de ramifications (17) vers une seconde entrée de signaux (11') des dispositifs individuels interchangeables (2).

14. Appareil selon l'une des revendications 10 à 13, **caractérisé par le fait que** le dispositif commun de commande (6) est pourvu d'au moins une entrée de signaux (15) et d'au moins une sortie de signaux (16), ainsi que d'un ordinateur central (10) connecté, à la fois, aux premier et second réseaux (8, 9) de traitement de données.

15. Appareil selon l'une des revendications 10 à 14, **caractérisé par le fait que** le premier réseau (8) de traitement de données est réalisé sous la forme d'un réseau à configuration en guirlande.

16. Appareil selon l'une des revendications 10 à 15, **caractérisé par le fait que** le second réseau (9) de traitement de données est réalisé sous la forme d'une connexion Ethernet.

17. Installation de finition d'impression, équipée d'un appareil (7) conforme à l'une des revendications 10 à 16 et **caractérisée par le fait que** ladite installation (1) de finition d'impression comprend plusieurs dispositifs individuels interchangeables (2), raccordés au dispositif commun de commande (6) par l'intermédiaire des premier et second réseaux (8, 9) de traitement de données.

18. Installation de finition d'impression selon la revendication 17, **caractérisée par le fait qu'**elle comporte, en plus des dispositifs individuels interchangeables (2), au moins un dispositif individuel (3, 4, 5) à implantation fixe raccordé, au dispositif commun de commande (6), uniquement par l'intermédiaire du second réseau (9) de traitement de données.

19. Installation de finition d'impression selon la revendication 17 ou 18, **caractérisée par le fait que** ladite installation (1) de finition d'impression est réalisée sous la forme d'une encarteuse-piqueuse, et ses dispositifs individuels interchangeables (2) sont réalisés en tant que margeurs (2.1, 2.2, 2.3,..., 2.n) de ladite encarteuse-piqueuse.
